# EUROPEAN PATENT SPECIFICATION

(11) **EP 3 076 214 B1**
(45) Date of publication and mention of the grant of the patent: **13.05.2020**
(21) Application number: 14865303.3
(22) Date of filing: 09.10.2014
(51) Int. Cl.: G02B 6/38

(54) **OPTICAL FIBRE CONNECTOR FIXING BRACKET AND COMMUNICATION DEVICE**
BEFESTIGUNGSWINKEL FÜR GLASFASERVERBINDER UND KOMMUNIKATIONSVORRICHTUNG
SUPPORT DE FIXATION DE CONNECTEUR DE FIBRE OPTIQUE ET DISPOSITIF DE COMMUNICATION

(30) Priority: 27.11.2013 CN 201310636412
(43) Date of publication of application: 05.10.2016
(73) Proprietor: Huawei Technologies Co., Ltd., Longgang District Shenzhen, Guangdong 518129 (CN)
(72) Inventor: LV, Jie, Shenzhen, Guangdong 518129 (CN); YAN, Xiongwu, Shenzhen, Guangdong 518129 (CN); XU, Qianfeng, Shenzhen, Guangdong 518129 (CN)
(74) Representative: Isarpatent
(86) International application number: PCT/CN2014/088173
(87) International publication number: WO 2015/078234

(56) References cited:
- CN-A- 1 243 962
- CN-A- 102 725 670
- CN-A- 102 736 196
- CN-A- 102 736 196
- CN-A- 103 217 762
- CN-A- 103 217 762
- CN-A- 103 616 752
- US-A1- 2002 031 312
- US-A1- 2005 112 939
- US-A1- 2005 112 939

## Description

### TECHNICAL FIELD

The present invention relates to optical communication devices, and particularly relates to an optical fiber connector fixed mount.

### BACKGROUND

An optical transmission system device uses an optical fiber to achieve signal transmission with other communication devices. Generally, a communication device includes an optical fiber connector fixed mount for fixing an optical fiber connector, such that an optical fiber output port of the optical fiber connector faces to the external of the communication device. In the prior art, the optical fiber connector and a housing of an optical module of the communication device are formed in one or fixedly connected by using a screw. Thus a direction of the optical fiber output port is fixed as well. There are two forms for the optical fiber output port in the prior art: a straight form and an inclined form respectively. At present, it is a common practice to develop optical fiber connector fixed mounts with two different forms which are used to respectively realize these two forms of optical fiber output ports, resulting in waste of development resources. It is a research subject in the industry that how to design a universal optical fiber connector fixed mount capable of simultaneously satisfying these two forms of optical fiber output ports.

In addition, document CN103217762A relates to a fiber outcoming structural component and an optical module. Paragraph [0043] of the document discloses that the connecting member is provided with several grooves, which are used for limiting the position and rotation angle of the fixed block of the flange, in order to realize the conversion of different angles of the optical port of the flange. In the embodiment of the present invention, the fiber outcoming structural component using the deforming and reset principal of the spring, the spring plunger is pushed at the connection member in the rear end of the fixed block of the flange. When the force which is used for pushing the fixed block of the flange is larger than the elastic force of the spring plunger, the fixed block of the flange will rotate around the rotating axis. When the fixed block of the flange is rotated to one groove of the connecting member, the knob of the spring plunger pops out and is fixed on the fixed block of the flange to stop the rotation of the fixed block of the flange, thereby realizing the conversion between the straight form and the inclined form of the optical port.

In addition, document CN102736196A relates to a light transceiver which has an optical socket with a port. Paragraph [0082] of the document discloses that the main body of the socket can be rotated using the projection as an axis, and the cavity of the main body of the socket can be rotated to an inclined and/or parallel position relative to the longitudinal direction of the optical transceiver.

In addition, document US 2005/0112939 relates to a rotatable adapter used to receive fiber optic connector. Paragraph [0059] of this document discloses that a left side wall 316 and a right side wall 318 have an arcuate outer surface, respectively. Paragraph [0062] of document discloses that recesses 324, 328, 332 are provided in the arcuate outer surface of the left side wall 316, and recesses 330, 326, 334 are provided in the arcuate outer surface of the right side wall 318. Paragraph [0065] of this document discloses that if ball plungers 260a, 260b do not enter into the recesses 326, 324, an insert 238 can be rotated to another position and the ball plungers are reengaged in the other recess.

### SUMMARY

A technical problem to be solved in the present invention is to provide a universal optical fiber connector fixed mount capable of simultaneously satisfying two different forms of optical fiber output ports.

To fulfill the above-mentioned purpose, the present invention provides an optical fiber connector fixed mount according to the independent claim, with possible further advantageous features according to the dependent claims.

An optical fiber connector fixed mount provided by the present invention, with the mounting member pivoting on the tray, can adjust the direction of the optical output port of the optical fiber connector, which has universality and reduces the cost of the communication device.

### BRIEF DESCRIPTION OF DRAWINGS

To illustrate technical solutions of the present invention more clearly, a brief introduction on the accompanying drawings which are needed in the description of the embodiments is given below. Apparently, the accompanying drawings in the description below are merely some of the embodiments of the present invention, based on which other drawings may be obtained by those of ordinary skill in the art without any creative effort.
Fig.1 is a schematic diagram of an optical fiber connector fixed mount provided by an embodiment of the present invention.
Fig.2 is a schematic diagram of an optical fiber connector fixed mount provided by an embodiment of the present invention.
Fig.3 is a stereoscopic exploded schematic diagram of an optical fiber connector fixed mount provided by an embodiment of the present invention.
Fig.4 is a schematic diagram of a mounting member of an optical fiber connector fixed mount provided by an embodiment of the present invention.
Fig.5 is a schematic diagram of a jacking element of a positioning mechanism of an optical fiber connector fixed mount provided by an embodiment of the present invention.

### DESCRIPTION OF EMBODIMENTS

A clear and complete description of the technical solutions in the embodiments of the present invention will be given below in combination with the accompanying drawings in the embodiments of the present invention.

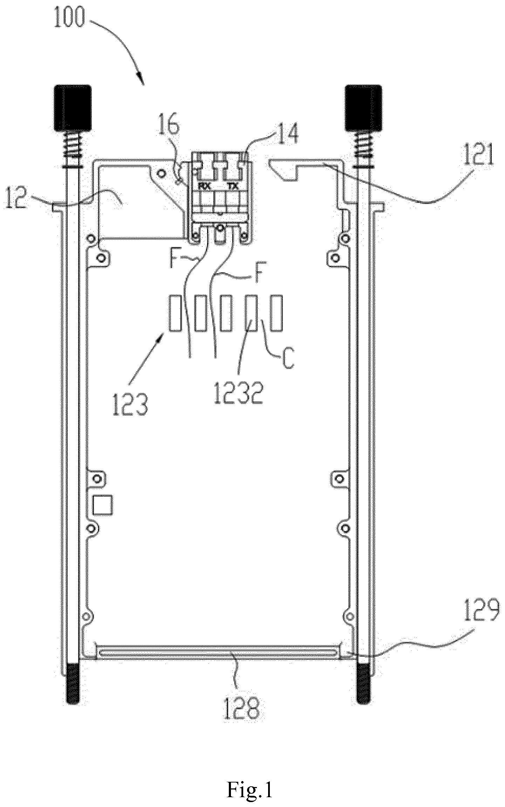

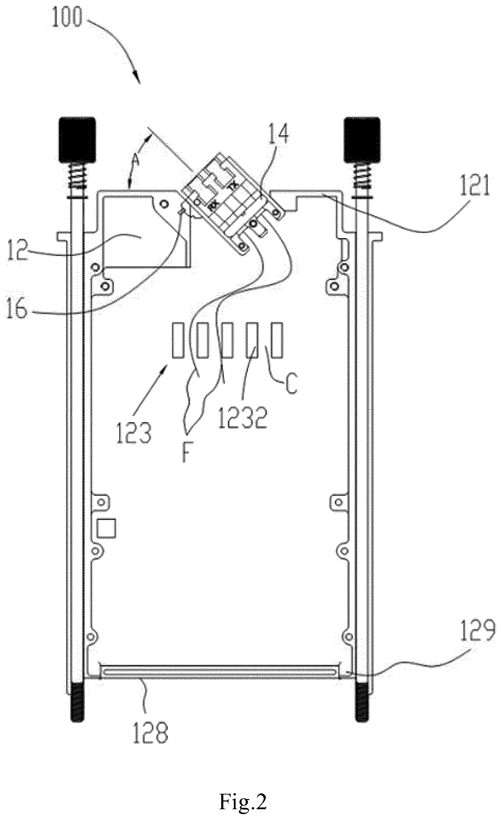

Please see Fig.1 and Fig.2. The present invention relates to a communication device (not shown) and an optical fiber connector fixed mount 100. The communication device includes a single board (not shown) and the optical fiber connector fixed mount 100, and the optical fiber connector fixed mount 100 is inserted into the communication device to be connected to the single board (not shown) in the communication device. The optical fiber connector fixed mount 100 is used for fixing an optical fiber connector and implementing a electrical connection between the optical fiber connector and the single board. Specifically, a connector is arranged on the optical fiber connector fixed mount 100. The connector is interconnected with a connector of the single board to implement the electrical connection between the single board and the optical fiber connector, or the electrical connection between the single board and the optical fiber connector is implemented by winding displacement. The optical fiber connector includes an optical output port which serves as an interface for communication connection between the communication device and other electronic products. The optical fiber connector fixed mount 100 provided by the present invention may be used for adjusting a direction of the optical output port of the optical fiber connector.

The optical fiber connector fixed mount 100 includes a tray 12, a mounting member 14 and a positioning mechanism 16. The tray 12 is connected to the single board (not shown) in the communication device. The mounting member 14 pivots on the tray 12 and is used for loading an optical fiber connector (not shown). The positioning mechanism 16 is located between the mounting member 14 and the tray 12 and cooperates with the mounting member 14 and the tray 12, in order to implement positioning between the mounting member 14 and the tray 12. The mounting member 14 is used for mounting the optical fiber connector. The mounting member 14 rotates relative to the tray 12, and the mounting member 14 is positioned in different positions by the positioning mechanism 16 to change the direction of the optical output port of the optical fiber connector.

An optical fiber connector fixed mount 100 provided by the present invention, with the mounting member 14 pivoting on the tray 12, can adjust the direction of the optical output port of the optical fiber connector, which has universality and reduces the cost of the communication device.

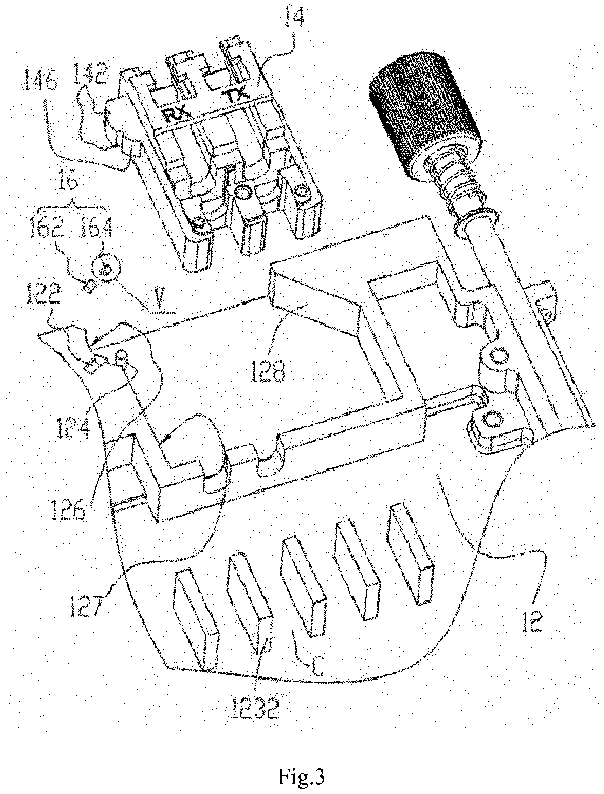

Please see Fig.3. In this embodiment, the positioning mechanism 16 includes an elastic element 162 and a jacking element 164. The tray 12 is provided with a receiving groove 122 for limiting positions of the elastic element 162 and the jacking element 164. The mounting member 14 includes at least two positioning grooves 142. The mounting member 14 pivots on the tray 12 on the pivot 124, and the at least two positioning grooves 142 are located on a same circumference with the pivot 124 as a center of circle. In a process of the mounting member 14 rotating relative to the tray 12, the jacking element 164 is pushed against the mounting member 14 due to an action of elastic force of the elastic element 162. The positioning between the mounting member 14 and the tray 12 is implemented through a fit between the jacking element 164 and one of the at least two positioning grooves 142. Specifically, the pivot 124 is fixed on the tray 12. The mounting member 14 is provided with an axle hole (not shown as the axle hole is covered in the figure) fitting with the pivot 124, and the mounting member 14 pivots on the tray 12 by the fitting between the pivot 124 and the axle hole.

In a process of the mounting member 14 rotating relative to the tray 12, the jacking element 164 is continuously pushed against the mounting member 14 due to an action of elastic force of the elastic element 162. When the jacking element 164 encounters one positioning groove 142, the jacking part fits in the positioning groove 142 to implement positioning between the mounting member 14 and the tray 12. In the embodiment, there are two positioning grooves 142, and there are two positioning forms of the mounting member 14. When the jacking part fits with one of the positioning groove 142, the direction of the optical output port of the optical fiber connector is vertical to an outer edge of the tray 12, which represents a straight optical output port (as shown in Fig. 1). When the jacking part fits with the other positioning groove 142, the angle between the direction of the optical output port of the optical fiber connector and the outer edge of the tray 12 is 45 degree, which represents an inclined optical output port (as shown in Fig. 2).

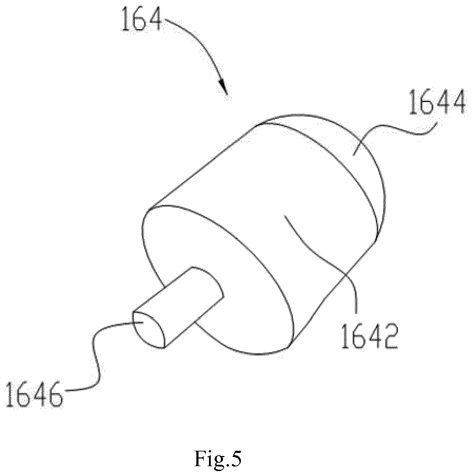

Please see Fig.5. In the embodiment, the jacking element 164 includes a body 1642, a jacking part 1644 and a positioning part 1646. The jacking part 1644 and the positioning part 1646 are respectively located at two sides of the body 1642. The jacking part 1644 stretches out from the receiving groove 122 and fits with the positioning grooves 142. The positioning part 1646 is used for connecting the elastic element 162. When installed, the elastic element 162 is placed in the receiving groove 122, and the positioning part 1646 of the jacking part 1644 is inserted into the receiving groove 122 to be connected to the elastic element 162. Specifically, the elastic element 162 is a spring, and one end of the spring is sleeved on the periphery of the positioning part 1646. The jacking part 1644 of the jacking element 164 is exposed outsides to fit with the mounting member 14, and the body 1642 of the jacking element 164 abuts on an inner wall of the receiving groove 122. The positioning mechanism 16 of the present embodiment is easy to assemble with stable structure. Moreover, in a process of the mounting member 14 rotating relative to the tray 12, automatic positioning can be implemented.

Specifically, the jacking part 1644 is hemispherical. When the mounting member 14 is positioned on the tray 12, the jacking part 1644 abuts on the positioning grooves 142.

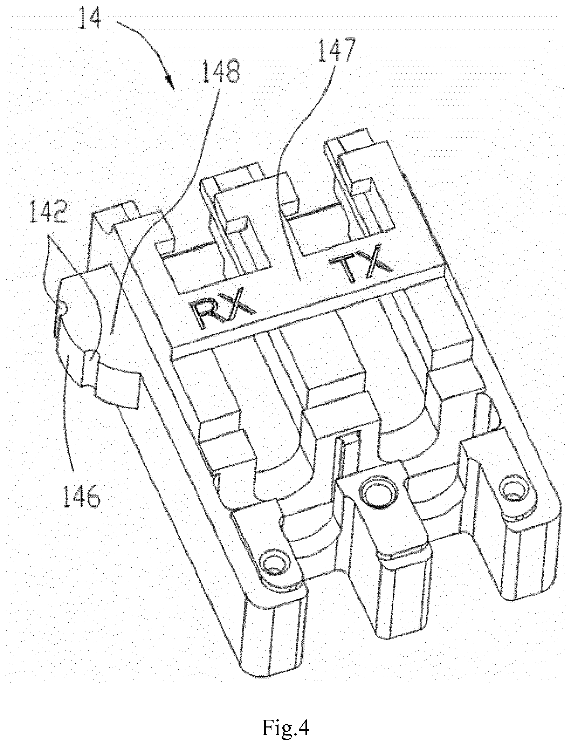

Please see Fig.3 and Fig.4. In this embodiment, the tray 12 includes a first arc-shaped surface 126. The mounting member 14 includes a second arc-shaped surface 146. The receiving groove 122 is formed on the first arc-shaped surface 126. The at least two positioning grooves 142 are formed on the second arc-shaped surface 146, and the first arc-shaped surface 126 abuts on the second arc-shaped surface 146. The mutual abutted structure makes the connection between the mounting member 14 and the tray 12 stable.

Please see Fig.4. In the embodiment, the mounting member 14 includes a main body 147 and a connecting part 148. The connecting part 148 is connected to a side of the main body 147, and the second arc-shaped surface 146 is formed on a surface of the connecting part 148 away from the main body 147.

In other embodiments, a receiving groove 122 is formed on the mounting member 14. An elastic element 162 and a jacking element 164 are positioned in the receiving groove 122. At least two positioning grooves 142 are provided on the tray 12. In a process of the mounting member 14 rotating relative to the tray 12, positioning between the mounting member 14 and the tray 12 is implemented by the same fitting relationship, namely, the jacking element 164 is pushed against the mounting member 14 due to an action of elastic force of the elastic element 162. Positioning between the mounting member 14 and the tray 12 is implemented through a fit between the jacking element 164 and one of the at least two positioning grooves 142.

The specific structure of the positioning mechanism 16 in the present invention is not limited to the above-mentioned embodiment. The positioning mechanism 16 in the present invention may also be in other forms. The positioning mechanism 16 may also be connected to the mounting member 14, and when the mounting member 14 rotates to a proper position, the mounting member 14 is fixed on the tray 12 in a manual manner by using the positioning mechanism 16. For example, the positioning mechanism 16 is a bolt connected to the mounting member 14, and correspondingly, at least two bolt holes are formed on the tray 12. When the mounting member 14 rotates to a proper position relative to the tray 12, the bolt is locked in a corresponding bolt hole to implement fixing between the mounting member 14 and the tray 12.

In addition, the mounting member 14 and the tray 12 may also be positioned by the friction force between the mounting member 14 and the tray 12. Namely, the mounting member 14 abuts on the tray 12 closely, and when the mounting member 14 rotates relative to the tray, an external force overcomes friction force to implement rotation. When the external force is removed, positioning between the mounting member 14 and the tray 12 is implemented by the friction force.

In other embodiments, teeth are arranged on a mutual contact surface between the mounting member 14 and the tray 12. Positioning between the mounting member and the tray is implemented in a mutual rotation process with the teeth meshing with each other.

Please see Fig.3. The tray 12 further includes a first limiting surface 127 and a second limiting surface 128 for limiting a range of rotation the mounting member 14 relative to the tray 12. The mounting member 14 is located between the first limiting surface 127 and the second limiting surface 128 and rotates relative to the tray 12 between the first limiting surface 127 and the second limiting surface 128. The first limiting surface 127 and the second limiting surface 128 limit the range of rotation of the mounting member 14, that is to say, limiting the range of rotation of the optical output port of the optical fiber connector. In this way, the optical fiber connector is prevented from rotating in an overlarge angle and it only needs to rotate within a necessary range, which improves efficiency of adjusting the direction of the optical output port.

Specifically, the tray 12 includes a front end 121 and a rear end 129. The mounting member 14 pivots on the front end 121 of the tray 12. The tray 12 further includes a connector 128 and an optical fiber guide structure 123. The connector 128 is arranged at the rear end 129. The optical fiber guide structure 123 is located between the mounting member 14 and the connector 128. The optical fiber connector is electrically connected to the connector 128 by using an optical fiber F, and the optical fiber guide structure 123 is used for positioning a route of the optical fiber F.

In the embodiment, the optical fiber guide structure 123 includes a plurality of 5 partitions 1232. The plurality of partitions 1232 are arranged in parallel, and two adjacent partitions 1232 form a channel C to enable the optical fiber F to pass through.

## Claims

1. An optical fiber connector fixed mount (100), comprising a tray (12), a mounting member (14) and a positioning mechanism (16), wherein the tray (12) is configured to be capable of connecting to a single board in a communication device, the mounting member (14) pivots on the tray (12) and is configured to load an optical fiber connector, the mounting member (14) is configured to mount the optical fiber connector, the mounting member (14) rotates relative to the tray (12) so as to change a direction of an optical output port of the optical fiber connector, and the positioning mechanism (16) is located between the mounting member (14) and the tray (12) and the positioning mechanism (16) cooperates with the mounting member (14) and the tray (12) in order to implement positioning between the mounting member (14) and the tray (12), which is configured to position the mounting member (14) in different positions; wherein the positioning mechanism (16) comprises an elastic element (162) and a jacking element (164), the tray (12) is provided with a receiving groove (122) to limit positions of the elastic element (162) and the jacking element (164), the mounting member (14) comprises at least two positioning grooves (142), the mounting member (14) pivots on the tray (12) on a pivot (124), the at least two positioning grooves (142) are located on a same circumference with the pivot (124) as a center of circle, in a process of the mounting member (14) rotating relative to the tray (12), the jacking element (164) is pushed against the mounting member (14) due to an action of elastic force of the elastic element (162), and the positioning between the mounting member (14) and the tray (12) is implemented through a fit between the jacking element (164) and one of the at least two positioning grooves (142);
wherein the mounting member (14) comprises a second arc-shaped surface (146), and the at least two positioning grooves (142) are formed on the second arc-shaped surface (146); **characterised in that**:
the tray (12) comprises a first arc-shaped surface (126), the receiving groove (122) is formed on the first arc-shaped surface (126), and the first arc-shaped surface (126) abuts on the second arc-shaped surface (146).

2. The optical fiber connector fixed mount (100) according to claim 1, wherein the jacking element (164) comprises a body (1642), a jacking part (1644) and a positioning part (1646), the jacking part (1644) and the positioning part (1646) are respectively located at two sides of the body (1642), the jacking part (1644) stretches out from the receiving groove (122) and fits with one of the at least two positioning grooves (142), and the positioning part (1646) is configured to connect the elastic element (162).

3. The optical fiber connector fixed mount (100) according to claim 2, wherein the jacking part (1644) is hemispherical, and when the mounting member (14) is positioned on the tray (12), the jacking part (1644) abuts on one of the at least two positioning grooves (142).

4. The optical fiber connector fixed mount (100) according to any of claims 1-3, wherein the mounting member (14) comprises a main body (147) and a connecting part (148), the connecting part (148) is connected to a side of the main body (147), and the second arc-shaped surface (146) is formed on a surface of the connecting part (148) away from the main body (147).

5. The optical fiber connector fixed mount (100) according to any of claims 1-4, wherein the tray (12) further comprises a first limiting surface (127) and a second limiting surface (128) for limiting a range of rotation of the mounting member (14) relative to the tray (12), the mounting member (14) is located between the first limiting surface (127) and the second limiting surface (128), and the mounting member (14) rotates relative to the tray (12) between the first limiting surface (127) and the second limiting surface (128).

6. The optical fiber connector fixed mount (100) according to any of claims 1-5, wherein the tray (12) comprises a front end (121) and a rear end (129), the mounting member (14) pivots on the front end (121) of the tray (12), the tray (12) further comprises a connector (128) and an optical fiber guide structure (123), the connector (128) is arranged at the rear end (129), the optical fiber guide structure (123) is located between the mounting member (14) and the connector (128), the optical fiber connector is electrically connected to the connector (128) by using an optical fiber, and the optical fiber guide structure (123) is configured to position a route of the optical fiber.

7. The optical fiber connector fixed mount (100) according to claim 6, wherein the optical fiber guide structure (123) comprises a plurality of partitions (1232), the plurality of partitions (1232) are arranged in parallel, and two adjacent partitions (1232) form a channel to enable the optical fiber to pass through.

8. A communication device, comprising a single board, wherein the communication device further comprises an optical fiber connector fixed mount (100) of any of claims 1-7, and the optical fiber connector fixed mount (100) is configured to fix an optical fiber connector and implement an electrical connection between the optical fiber connector and the single board.

## Patentansprüche

1. Feste Befestigung für einen Glasfaserverbinder (100), eine Schale (12), ein Befestigungselement (14) und einen Positionierungsmechanismus (16) aufweisend, wobei die Schale (12) dazu ausgebildet ist, in der Lage zu sein, sich mit einer einzelnen Platine in einer Kommunikationsvorrichtung zu verbinden, wobei sich das Befestigungselement (14) auf der Schale (12) dreht und dazu ausgebildet ist, einen Glasfaserverbinder aufzunehmen, wobei das Befestigungselement (14) dazu ausgebildet ist, den Glasfaserverbinder zu befestigen, wobei sich das Befestigungselement (14) relativ zur Schale (12) dreht, um eine Richtung eines optischen Ausgangsanschlusses des Glasfaserverbinders zu ändern, und wobei sich der Positionierungsmechanismus (16) zwischen dem Befestigungselement (14) und der Schale (12) befindet und der Positionierungsmechanismus (16) mit dem Befestigungselement (14) und der Schale (12) zusammenwirkt, um Positionierung zwischen dem Befestigungselement (14) und der Schale (12) umzusetzen, dazu ausgebildet, das Befestigungselement (14) in unterschiedlichen Positionen zu positionieren;
wobei der Positionierungsmechanismus (16) ein elastisches Element (162) und ein Steckelement (164) aufweist, wobei die Schale (12) mit einer Aufnahmenut (122) zum Begrenzen der Positionen des elastischen Elements (162) und des Steckelements (164) versehen ist, wobei das Befestigungselement (14) mindestens zwei Positionierungsnuten (142) aufweist, wobei sich das Befestigungselement (14) auf der Schale (12) an einem Zapfen (124) dreht, wobei sich die mindestens zwei Positionierungsnuten (142) auf einem gleichen Umfang mit dem Zapfen (124) als Kreismittelpunkt befinden, in einem Prozess, bei dem sich das Befestigungselement (14) relativ zur Schale (12) dreht, wobei das Steckelement (164) gegen das Befestigungselement (14) gedrückt wird in Folge einer Wirkung von elastischer Kraft des elastischen Elements (162), und wobei die Positionierung zwischen dem Befestigungselement (14) und der Schale (12) über eine Passung zwischen dem Steckelement (164) und einer der mindestens zwei Positionierungsnuten (142) umgesetzt wird;
wobei das Befestigungselement (14) eine zweite bogenförmige Oberfläche (146) aufweist und wobei mindestens zwei Positionierungsnuten (142) auf der zweiten bogenförmigen Oberfläche (146) ausgebildet sind; **dadurch gekennzeichnet, dass**:
die Schale (12) eine erste bogenförmige Oberfläche (126) aufweist, wobei die Aufnahmenut (122) auf der ersten bogenförmigen Oberfläche (126) ausgebildet ist und die erste bogenförmige Oberfläche (126) an der zweiten bogenförmigen Oberfläche (146) anliegt.

2. Feste Befestigung für einen Glasfaserverbinder (100) nach Anspruch 1, wobei das Steckelement (164) einen Körper (1642), einen Steckteil (1644) und einen Positionierungsteil (1646) aufweist, wobei der Steckteil (1644) und der Positionierungsteil (1646) entsprechend an zwei Seiten des Körpers (1642) befindlich sind, wobei sich der Steckteil (1644) von der Aufnahmenut (122) ausgehend ausdehnt und in eine der mindestens zwei Positionierungsnuten (142) eingreift, und wobei der Positionierungsteil (1646) dazu ausgebildet ist, das elastische Element (162) zu verbinden.

3. Feste Befestigung für einen Glasfaserverbinder (100) nach Anspruch 2, wobei der Steckteil (1644) halbkugelförmig ist, und wobei, wenn das Befestigungselement (14) auf der Schale (12) positioniert ist, der Steckteil (1644) an einer der mindestens zwei Positionierungsnuten (142) anliegt.

4. Feste Befestigung für einen Glasfaserverbinder (100) nach einem der Ansprüche 1-3, wobei das Befestigungselement (14) einen Hauptkörper (147) und einen Verbindungsteil (148) aufweist, wobei der Verbindungsteil (148) mit einer Seite des Hauptkörpers (147) verbunden ist und wobei die zweite bogenförmige Oberfläche (146) auf einer Oberfläche des Verbindungsteils (148) weg vom Hauptkörper (147) ausgebildet ist.

5. Feste Befestigung für einen Glasfaserverbinder (100) nach einem der Ansprüche 1-4, wobei die Schale (12) ferner eine erste begrenzende Oberfläche (127) und eine zweite begrenzende Oberfläche (128) zum Begrenzen eines Bereichs von Drehung des Befestigungselements (14) relativ zur Schale (12) aufweist, wobei sich das Befestigungselement (14) zwischen der ersten begrenzenden Oberfläche (127) und der zweiten begrenzenden Oberfläche (128) befindet und wobei sich das Befestigungselement (14) relativ zur Schale (12) zwischen der ersten begrenzenden Oberfläche (127) und der zweiten begrenzenden Oberfläche (128) dreht.

6. Feste Befestigung für einen Glasfaserverbinder (100) nach einem der Ansprüche 1-5, wobei die Schale (12) ein vorderes Ende (121) und ein hinteres Ende (129) aufweist, wobei sich das Befestigungselement (14) am vorderen Ende (121) der Schale (12) dreht, wobei die Schale (12) ferner einen Verbinder (128) und eine Glasfaserführungsstruktur (123) aufweist, wobei der Verbinder (128) am hinteren Ende (129) angeordnet ist, wobei sich die Glasfaserführungsstruktur (123) zwischen dem Befestigungselement (14) und dem Verbinder (128) befindet, wobei der Glasfaserverbinder unter Verwendung einer Glasfaser elektrisch mit dem Verbinder (128) verbunden ist, und wobei die Glasfaserführungsstruktur (123) dazu ausgebildet ist, eine Route der Glasfaser zu positionieren.

7. Feste Befestigung für einen Glasfaserverbinder (100) nach Anspruch 6, wobei die Glasfaserführungsstruktur (123) mehrere Teilungen (1232) aufweist, wobei die mehreren Teilungen (1232) parallel angeordnet sind, und wobei zwei angrenzende Teilungen (1232) einen Kanal bilden, durch den die Glasfaser hindurchlaufen kann.

8. Kommunikationsvorrichtung, eine einzelne Platine aufweisend, wobei die Kommunikationsvorrichtung ferner eine feste Befestigung für einen Glasfaserverbinder (100) nach einem der Ansprüche 1-7 aufweist, und wobei die feste Befestigung für einen Glasfaserverbinder (100) dazu ausgebildet ist, einen Glasfaserverbinder zu befestigen und eine elektrische Verbindung zwischen dem Glasfaserverbinder und der einzelnen Platine umzusetzen.

## Revendications

1. Support fixe de connecteur de fibre optique (100), comprenant un plateau (12), un organe de montage (14) et un mécanisme de positionnement (16), dans lequel le plateau (12) est configuré pour pouvoir se raccorder à une seule carte dans un dispositif de communication, l'organe de montage (14) pivote sur le plateau (12) et est configuré pour charger un connecteur de fibre optique, l'organe de montage (14) est configuré pour monter le connecteur de fibre optique, l'organe de montage (14) tourne par rapport au plateau (12) de sorte à changer une direction d'un port de sortie optique du connecteur de fibre optique et le mécanisme de positionnement (16) est situé entre l'organe de montage (14) et le plateau (12) et le mécanisme de positionnement (16) coopère avec l'organe de montage (14) et le plateau (12) afin de réaliser le positionnement entre l'organe de montage (14) et le plateau (12), qui est configuré pour positionner l'organe de montage (14) dans différentes positions ;
dans lequel le mécanisme de positionnement (16) comprend un élément élastique (162) et un élément de levage (164), le plateau (12) est pourvu d'une rainure de réception (122) pour limiter des positions de l'élément élastique (162) et de l'élément de levage (164), l'organe de montage (14) comprend au moins deux rainures de positionnement (142), l'organe de montage (14) pivote sur le plateau (12) sur un pivot (124), les deux, ou plus, rainures de positionnement (142) sont situées sur une même circonférence avec le pivot (124) en tant que centre d'un cercle, lors d'un processus de rotation de l'organe de montage (14) par rapport au plateau (12), l'élément de levage (164) est poussé contre l'organe de montage (14) en raison d'une action d'une force élastique de l'élément élastique (162) et le positionnement entre l'organe de montage (14) et le plateau (12) est réalisé au moyen d'un ajustement entre l'élément de levage (164) et l'une des deux, ou plus, rainures de positionnement (142) ;
dans lequel l'organe de montage (14) comprend une seconde surface en forme d'arc (146) et
les deux, ou plus, rainures de positionnement (142) sont formées sur la seconde surface en forme d'arc (146) ; **caractérisé en ce que** :
le plateau (12) comprend une première surface en forme d'arc (126), la rainure de réception (122) est formée sur la première surface en forme d'arc (126) et la première surface en forme d'arc (126) vient en butée contre la seconde surface en forme d'arc (146).

2. Support fixe de connecteur de fibre optique (100) selon la revendication 1, dans lequel l'élément de levage (164) comprend un corps (1642), une parie de levage (1644) et une partie de positionnement (1646), la partie de levage (1644) et la partie de positionnement (1646) sont respectivement situées sur deux côtés du corps (1642), la partie de levage (1644) s'étend à partir de la rainure de réception (122) et s'ajuste avec l'une des deux, ou plus, rainures de positionnement (142) et la partie de positionnement (1646) est configurée pour relier l'élément élastique (162).

3. Support fixe de connecteur de fibre optique (100) selon la revendication 2, dans lequel la partie de levage (1644) est hémisphérique et, lorsque l'organe de montage (14) est positionné sur le plateau (12), la partie de levage (1644) vient en butée contre l'une des deux, ou plus, rainures de positionnement (142).

4. Support fixe de connecteur de fibre optique (100) selon l'une quelconque des revendications 1 à 3, dans lequel l'organe de montage (14) comprend un corps principal (147) et une partie de raccordement (148), la partie de raccordement (148) est raccordée à un côté du corps principal (147) et la seconde surface en forme d'arc (146) est formée sur une surface de la partie de raccordement (148) à distance du corps principal (147).

5. Support fixe de connecteur de fibre optique (100) selon l'une quelconque des revendications 1 à 4, dans lequel le plateau (12) comprend en outre une première surface de limitation (127) et une seconde surface de limitation (128) pour limiter une plage de rotation de l'organe de montage (14) par rapport au plateau (12), l'organe de montage (14) est situé entre la première surface de limitation (127) et la seconde surface de limitation (128) et l'organe de montage (14) tourne par rapport au plateau (12) entre la première surface de limitation (127) et la seconde surface de limitation (128).

6. Support fixe de connecteur de fibre optique (100) selon l'une quelconque des revendications 1 à 5, dans lequel le plateau (12) comprend une extrémité avant (121) et une extrémité arrière (129), l'organe de montage (14) pivote sur l'extrémité avant (121) du plateau (12), le plateau (12) comprend en outre un connecteur (128) et une structure de guidage de fibre optique (123), le connecteur (128) est agencé au niveau de l'extrémité arrière (129), la structure de guidage de fibre optique (123) est située entre l'organe de montage (14) et le connecteur (128), le connecteur de fibre optique est raccordé électriquement au connecteur (128) en utilisant une fibre optique et la structure de guidage de fibre optique (123) est configurée pour positionner un chemin de la fibre optique.

7. Support fixe de connecteur de fibre optique (100) selon la revendication 6, dans lequel la structure de guidage de fibre optique (123) comprend une pluralité de cloisons (1232), la pluralité de cloisons (1232) sont agencées en parallèle, et deux cloisons adjacentes (1232) forment un canal pour permettre le passage de la fibre optique.

8. Dispositif de communication, comprenant une seule carte, dans lequel le dispositif de communication comprend en outre un support fixe de connecteur de fibre optique (100) selon l'une quelconque des revendications 1 à 7 et le support fixe de connecteur de fibre optique (100) est configuré pour fixer un connecteur de fibre optique et pour établir une connexion électrique entre le connecteur de fibre optique et la seule carte.
